(19) Europäisches Patentamt
European Patent Office
Office européen des brevets

(11) EP 4 804 711 A1

(12) EUROPEAN PATENT APPLICATION
published in accordance with Art. 153(4) EPC

(43) Date of publication:
**09.09.2026 Bulletin 2026/37**

(21) Application number: **24909853.4**

(22) Date of filing: **16.08.2024**

(51) International Patent Classification (IPC):
***H04W 74/0836*** *(2024.01)*

(52) Cooperative Patent Classification (CPC):
**H04W 56/00; H04W 74/00; H04W 74/0836**

(86) International application number:
**PCT/CN2024/112825**

(87) International publication number:
**WO 2025/138902 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023 CN 202311820749**
**08.02.2024 CN 202410178294**

(71) Applicant: **Honor Device Co., Ltd.**
**Shenzhen, Guangdong 518040 (CN)**

(72) Inventors:
- **MENG, Zhao**
  **Shenzhen, Guangdong 518040 (CN)**
- **ZENG, Wei**
  **Shenzhen, Guangdong 518040 (CN)**
- **XUE, Chao**
  **Shenzhen, Guangdong 518040 (CN)**
- **LUO, Fei**
  **Shenzhen, Guangdong 518040 (CN)**

(74) Representative: **Gill Jennings & Every LLP**
**The Broadgate Tower**
**20 Primrose Street**
**London EC2A 2ES (GB)**

# (54) RANDOM ACCESS METHOD AND APPARATUS

(57) Embodiments of this application provide a random access method and an apparatus, and relate to the field of communication technologies, to reduce impact on an ongoing service of a terminal device, and improve service quality, thereby improving user experience. The method includes: a terminal device sends a random access preamble; the terminal device receives a random access response message, where the random access response message carries a timing advance TA value; and when the TA value is greater than a first preset threshold, the terminal device resends the random access preamble.

Terminal device
Network device corresponding to a first cell (an original cell)
Network device corresponding to a second cell (a target cell 1)
Network device corresponding to a third cell (a target cell 2)
501. The terminal device camps on the first cell to perform a first service
502. The terminal device receives an RRC connection reconfiguration message, where the RRC connection reconfiguration message carries first information, and the first information is used for indicating the terminal device to be handed over to the second cell
503. The terminal device sends a random access preamble (Msg 1) to the network device corresponding to the second cell
504. The network device corresponding to the second cell sends a random access response message (Msg 2) to the terminal device
507. When the TA value is less than or equal to the first preset threshold, the terminal device sends an RRC connection reconfiguration complete message to the network device corresponding to the second cell
505. The terminal device determines whether a TA value carried in the random access response message is larger than a first preset threshold
N
Y
506. When the TA value is larger than the first preset threshold, the terminal device resends the random access preamble to the network device corresponding to the second cell
508. The network device corresponding to the second cell sends the random access response message to the terminal device
Repeat N times
509. After the terminal device resends the random access preamble for an Nth time, when a TA value in a random access response message received from the network device corresponding to the second cell is larger than a second preset threshold, the terminal device skips resending the random access preamble to the network device corresponding to the second cell
510. The terminal device determines that an RLF occurs in the second cell
511. The terminal device establishes an RRC connection to the network device corresponding to the third cell through an RRC reestablishment process

FIG. 5



Processed by Luminess, 75001 PARIS (FR)

## Description

This application claims priority to Chinese Patent Application No. 202311820749.6, filed with the China National Intellectual Property Administration on December 26, 2023 and entitled "METHOD FOR IMPROVING PERFORMANCE OF ELECTRONIC DEVICE AND ELECTRONIC DEVICE" and Chinese Patent Application No. 202410178294.0, filed with the China National Intellectual Property Administration on February 8, 2024 and entitled "RANDOM ACCESS METHOD AND APPARATUS", which are incorporated herein by reference in their entireties.

## TECHNICAL FIELD

Embodiments of this application relate to the field of communication technologies, and in particular, to a random access method and an apparatus.

## BACKGROUND

When camping on a serving cell, a terminal device may receive a handover command from a network device (for example, a base station) corresponding to the serving cell, and initiate random access to a target cell based on the handover command. A random access procedure may include the following steps. S1. The terminal device sends a random access preamble (preamble) to a network device (for example, the base station) corresponding to the target cell. S2. The network device corresponding to the target cell sends a random access response (random access response, RAR) to the terminal device. Therefore, the terminal device may access the target cell.

However, after the terminal device accesses the target cell and sends uplink data in the target cell, a problem that the uplink data sent by the terminal device cannot be normally decoded by a network side may occur, and an ongoing service of the terminal device is affected (for example, audio loss may be caused during an ongoing call of the terminal device). Consequently, user experience is degraded.

## SUMMARY

Embodiments of this application provide a random access method and an apparatus, to reduce impact on an ongoing service of a terminal device, and improve service quality, thereby improving user experience.

To achieve the foregoing objectives, the embodiments of this application adopt the following technical solutions.

According to a first aspect, an embodiment of this application provides a random access method, including: a terminal device sends a random access preamble; the terminal device receives a random access response message, where the random access response message carries a timing advance TA value; and when the TA value is greater than a first preset threshold, the terminal device resends the random access preamble.

Based on the method according to this embodiment of this application, the terminal device may resend the random access preamble (Msg 1) to request a new TA value, and ignore the received excessively large TA value. A problem that an excessively large TA value delivered by a network side affects an ongoing service (for example, a voice service or a data service) of the terminal device can be avoided, so that user experience can be improved.

In a possible implementation, the method further includes: after the terminal device resends the random access preamble for an $N^{th}$ time, when a TA value in a received random access response message is greater than a second preset threshold, the terminal device skips resending the random access preamble, where N is an integer greater than or equal to 1. In this way, a scenario in which a TA value required by the terminal device is large (for example, the TA value actually required by the terminal device needs to be greater than the second preset threshold value) is compatible. The terminal device may adjust a sending occasion of an uplink frame in a subsequent uplink transmission process based on the large TA value.

In a possible implementation, before the terminal device sends the random access preamble, the method further includes: the terminal device receives, when camping on a first cell, a radio resource control RRC connection reconfiguration message from a first network device, where the first network device is a network device corresponding to the first cell, the RRC connection reconfiguration message carries first information, and the first information is used for indicating the terminal device to be handed over to a second cell. That a terminal device sends a random access preamble includes: the terminal device sends the random access preamble to a second network device based on the first information, where the second network device is a network device corresponding to the second cell. In other words, the terminal device may send the random access preamble to the second network device (the network device corresponding to the second cell) based on the first information in the RRC connection reconfiguration message, to be handed over to the second cell.

In a possible implementation, the method further includes: after the terminal device resends the random access preamble for the $N^{th}$ time, the terminal device sends an RRC connection reconfiguration complete message to the first network device when the TA value in the received random access response message is greater than the second preset

threshold; after the terminal device sends the RRC connection reconfiguration complete message to the first network device, the terminal device determines that a radio link failure RLF occurs in the second cell; and the terminal device sends an RRC connection reestablishment message to a third network device, where the third network device is a network device corresponding to a third cell, and the third cell is different from the second cell. After the terminal device sends the RRC connection reconfiguration complete message to the first network device, in a process in which the terminal device communicates with the second cell, the terminal device may adjust the sending occasion of the uplink frame based on the large TA value (that is, the TA value greater than the second preset threshold). However, in the process in which the terminal device communicates with the second cell, an RLF may occur on the terminal device. In this case, the terminal device may send the RRC connection reestablishment message to the third network device (the network device corresponding to the third cell), to establish an RRC connection to the network device corresponding to the third cell. In this way, a problem that an ongoing service (for example, a voice service or a data service) of the terminal device is affected can be avoided, and user experience can be improved.

In a possible implementation, that the terminal device determines that a radio link failure RLF occurs in the second cell includes: the terminal device determines that an uplink bit error rate of the terminal device in the second cell exceeds a third preset threshold value. The uplink bit error rate is an indicator for measuring data transmission accuracy of uplink data within specified duration. The uplink bit error rate = a quantity of bit errors in uplink transmission/a total quantity of bits transmitted in uplink transmission * 100%.

In a possible implementation, the method further includes: after the terminal device resends the random access preamble for the $N^{th}$ time, when the TA value in the received random access response message is greater than the second preset threshold, the terminal device determines that a radio link failure RLF occurs in the second cell; and the terminal device sends an RRC connection reestablishment message to a third network device, where the third network device is a network device corresponding to a third cell, and the third cell is different from the second cell. In other words, after the terminal device resends the random access preamble for the $N^{th}$ time, the RLF can be triggered when the TA value in the received random access response message is greater than the second preset threshold. In this case, the terminal device may send the RRC connection reestablishment message to the third network device (the network device corresponding to the third cell), to establish an RRC connection to the network device corresponding to the third cell. In this way, a problem that an ongoing service (for example, a voice service or a data service) of the terminal device is affected can be avoided, and user experience can be improved.

In a possible implementation, the terminal device is in a high-speed moving state when sending the random access preamble. That the terminal device is in a high-speed moving state includes: displacement of the terminal device in a preset time period is greater than a first preset threshold value, and/or an average speed/acceleration of the terminal device in the preset time period is greater than a second preset threshold value.

In a possible implementation, the first cell is a high-speed rail cell or a subway cell. When camping on the high-speed rail cell or the subway cell, the terminal device is usually in the high-speed moving state. After the network side receives the random access preamble (Msg 1) sent by the terminal device in the high-speed moving state, there is a probability that a deviation occurs in calculation of the TA value, resulting in an excessively large TA value carried in an Msg 2. Based on the method according to this embodiment of this application, the terminal device may resend the random access preamble (Msg 1) to request a new TA value, and ignore the received excessively large TA value. A problem that an excessively large TA value delivered by a network side affects an ongoing service (for example, a voice service or a data service) of the terminal device can be avoided, so that user experience can be improved.

In a possible implementation, the second cell is a high-speed rail cell or a subway cell. When the terminal device is to be handed over to the high-speed rail cell or the subway cell, the terminal device may be in the high-speed moving state. After the network side receives the random access preamble (Msg 1) sent by the terminal device in the high-speed moving state, there is a probability that a deviation occurs in calculation of the TA value, resulting in an excessively large TA value carried in an Msg 2. Based on the method according to this embodiment of this application, the terminal device may resend the random access preamble (Msg 1) to request a new TA value, and ignore the received excessively large TA value. A problem that an excessively large TA value delivered by a network side affects an ongoing service (for example, a voice service or a data service) of the terminal device can be avoided, so that user experience can be improved.

In a possible implementation, that the terminal device resends the random access preamble to the second network device includes: the terminal device discards the random access response message, and resends the random access preamble to the second network device. This case may be understood as that, the terminal device ignores the excessively large TA value (that is, the TA value greater than the first preset threshold) in the Msg 2 delivered for the first time by the network device corresponding to the second cell, and re-requests a TA value from the network device corresponding to the second cell.

In a possible implementation, that the terminal device receives, when camping on a first cell, a radio resource control RRC connection reconfiguration message from a first network device includes: the terminal device receives, when camping on the first cell to perform a first service, the RRC connection reconfiguration message from the first network device, where the first service includes a voice service or a data service.

In a possible implementation, the method further includes one or more of the following: the third cell being a high-speed rail cell or a subway cell; or the first cell being a long term evolution LTE cell, and the second cell being an LTE cell; or the first cell being a new radio NR cell, and the second cell being an NR cell; or the first cell being an LTE cell, and the second cell being an NR cell; or the first cell being an NR cell, and the second cell being an LTE cell; or the third cell being an LTE cell or an NR cell. In other words, handover of the terminal device from the first cell to the second/third cell can be either intra-system cell handover or inter-system cell handover.

This application provides some embodiments, to improve performance of a terminal and reduce a probability that a service abnormality occurs on the terminal.

According to a second aspect, an embodiment of this application provides a method for improving performance of a terminal device. The method includes:

a terminal device sends an Msg 1 message used for initiating a random access procedure to a network side;

the terminal device receives a random access response message Msg 2 message sent by the network side, where the Msg 2 message carries a timing advance TA value; and

the terminal device resends the Msg 1 message when the TA value is greater than a first preset threshold.

In some embodiments, that the terminal device resends the Msg 1 message when the TA value is greater than a first preset threshold includes:

the terminal device discards the Msg 2 message, and resends the Msg 1 message when the TA value is greater than the first preset threshold.

In some embodiments, before the terminal device sends the Msg 1 message used for initiating the random access procedure to the network side, the method further includes:

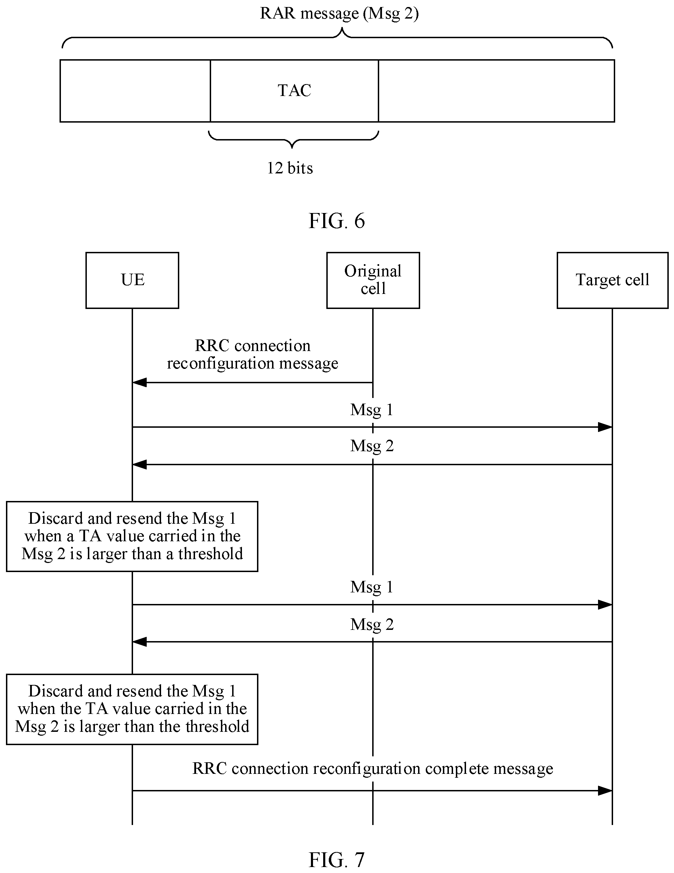

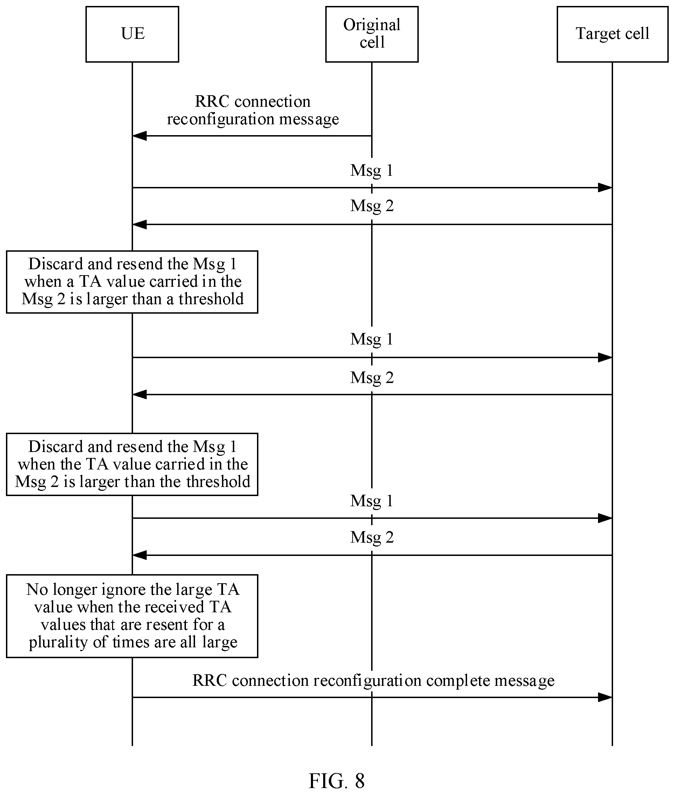

when camping on a first cell (for example, an original cell shown in FIG. 7 or FIG. 8), the terminal device receives an RRC connection reconfiguration message (for example, RRCConnectionReconfiguration shown in FIG. 7 or FIG. 8) sent by a base station corresponding to the first cell, where the RRC connection reconfiguration message carries first information, and the first information (for example, mobilityControlInfo shown in FIG. 7 or FIG. 8, which is mobility control information) is used for indicating the terminal device to be handed over to a second cell (for example, the first information may carry information such as a cell ID and/or a frequency of the second cell).

That a terminal device sends an Msg 1 message used for initiating a random access procedure to a network side includes:

the terminal device sends, based on the first information, the Msg 1 message to a base station corresponding to the second cell.

In some embodiments, that when camping on a first cell, the terminal device receives an RRC connection reconfiguration message sent by a base station corresponding to the first cell includes:

the terminal device receives, when camping on the first cell and being in a high-speed moving state, the RRC connection reconfiguration message sent by the base station corresponding to the first cell.

In some embodiments, the first cell is a high-speed rail cell. The second cell may be a high-speed rail cell or a non-high-speed rail cell. The high-speed rail cell may be a specific cell disposed along a high-speed rail line.

In some embodiments, network standards of the first cell and the second cell are the same or different. For example: The first cell is an LTE cell, and the second cell is an LTE cell; or the first cell is an NR cell, and the second cell is an NR cell; or the first cell is an LTE cell, and the second cell is an NR cell; or the first cell is an NR cell, and the second cell is an LTE cell.

In some embodiments, the method further includes:

after the terminal device resends the Msg 1 message for an $N^{th}$ time, when a TA value in a received Msg 2 message is greater than a second preset threshold, the terminal device completes the random access procedure based on the Msg 2 message (it may be understood that the random access procedure may include more messages in addition to the Msg 1 and the Msg 2), and further successfully accesses the second cell (for example, a target cell shown in FIG. 8). An RRC connection reconfiguration complete (RRC ConnectionReconfigurationComplete) message shown in FIG. 8 may indicate that the terminal device has completed the random access procedure.

In some embodiments, a value of the second preset threshold may be the same as or different from a value of the first preset threshold.

According to a third aspect, a terminal device is provided, including: a processor and a memory, where the memory stores computer-executable instructions; and the processor executes the computer-executable instructions stored in the memory, to enable the terminal device to perform the method according to any one of the possible implementations of the first aspect or the second aspect.

According to a fourth aspect, a chip system is provided, including at least one processor and a communication interface. The communication interface is connected to the at least one processor through a line, and the at least one processor is configured to run a computer program or instructions, to perform the method according to any one of the possible implementations of the first aspect or the second aspect.

According to a fifth aspect, an embodiment of this application provides a computer-readable storage medium,

and a computer program is stored in the computer-readable storage medium. The computer program, when being executed by a processor, implements the method according to any one of the possible implementations of the first aspect or the second aspect.

According to a sixth aspect, an embodiment of this application provides a computer program product. The computer program product includes a computer program. When the computer program is run, a computer is enabled to perform the method according to any one of the possible implementations of the first aspect or the second aspect.

It may be understood that the terminal device according to the third aspect, the chip system according to the fourth aspect, the computer storage medium according to the fifth aspect, and the computer program product according to the sixth aspect are all configured to perform the method according to any one of the possible implementations of the first aspect or the second aspect. Therefore, for beneficial effects that can be achieved by the terminal device according to the third aspect, the chip system according to the fourth aspect, the computer storage medium according to the fifth aspect, and the computer program product according to the sixth aspect, refer to the beneficial effects in any one of the possible implementations of the first aspect or the second aspect. Details are not described herein again.

## BRIEF DESCRIPTION OF DRAWINGS

FIG. 1 is a schematic diagram of signal interaction according to a related technology;
FIG. 2 is a schematic diagram of a network architecture according to an embodiment of this application;
FIG. 3 is a schematic diagram of another network architecture according to an embodiment of this application;
FIG. 4 is a schematic diagram of a voice call scenario according to an embodiment of this application;
FIG. 5 is a schematic diagram of signal interaction to which a random access method is applicable according to an embodiment of this application;
FIG. 6 is a schematic diagram of a format of an RAR message according to an embodiment of this application;
FIG. 7 is a schematic diagram of other signal interaction according to an embodiment of this application;
FIG. 8 is a schematic diagram of other signal interaction according to an embodiment of this application;
FIG. 9 is a schematic diagram of a hardware structure of a terminal device according to an embodiment of this application;
FIG. 10 is a block diagram of a software structure of a terminal device according to an embodiment of this application; and
FIG. 11 is a schematic diagram of a structure of a chip system according to an embodiment of this application.

## DESCRIPTION OF EMBODIMENTS

For clear and concise descriptions of the following embodiments, a brief introduction to a related concept or technology is first provided.

1. Cell (cell): The cell is an area within wireless coverage of a network device (for example, a base station). In this area, a terminal device can communicate reliably with the network device through a wireless signal. It may be understood that coverage of each network device may be divided into one or more cells, and each cell may correspond to one or more frequencies. It may be further understood that each cell is an area formed by coverage of one or more frequencies.

In some embodiments of this application, different cells may correspond to a same network device. For example, a network device to which a first cell belongs and a network device to which a second cell belongs may be a same network device. In other words, the first cell and the second cell may be managed by a same base station. In this case, the first cell and the second cell may be co-sited.

In some embodiments of this application, different cells may correspond to different network devices. For example, the network device to which the first cell belongs and the network device to which the second cell belongs may be different network devices. In other words, the first cell and the second cell may be managed by different base stations. Alternatively, the first cell and the second cell may be managed by the same base station, but the first cell and the second cell correspond to different radio frequency processing units in the same base station.

2. Adjacent cell: The adjacent cell is also referred to as a neighboring cell or a neighbor cell, and refers to an area within wireless coverage of a network device that is adjacent to a current serving cell, has a physical location correlation, and transmits signals on a same frequency or on different frequencies. In other words, the adjacent cell refers to a cell that is connected to or adjacent to a current serving cell. Generally, the adjacent cell may be understood as a "surrounding cell" of the current serving cell.

3. Cell handover (Handover, HO): The cell handover refers to a process of migrating a communication link from a terminal device to a current network device to another network device in mobile communication. In a wireless communication system, when the terminal device moves from one cell to another cell or approaches another cell, cell handover needs to be performed to maintain continuous communication of the terminal device.

The cell handover can be intra-station handover or inter-station handover. This is not specifically limited in this application. The intra-station handover means that an original cell (or referred to as a source cell) and a target cell belong to a same network device (for example, a base station). The inter-station handover means that the source cell and the target cell belong to different network devices (for example, base stations).

In this application, the original cell refers to a cell that provides services to the terminal device before the cell handover, and the target cell refers to a cell that provides services to the terminal device after the cell handover.

In some scenarios, the terminal device may receive a handover command on a currently camped cell (that is, the original cell), and initiate random access to the target cell based on the handover command. A random access procedure may include the following steps. S1. The terminal device selects a preamble index (preamble index) and a physical random access channel (physical random access channel, PRACH) resource used for sending a preamble, and sends a random access preamble (preamble) on the resource. S2. The base station sends a random access response to the terminal device. Therefore, the terminal device may access the target cell.

However, after the terminal device accesses the target cell, a problem that uplink data sent by the terminal device in the target cell cannot be normally decoded by a network side may occur. Consequently, an uplink bit error rate of the terminal device is excessively high, normal services of the terminal device are affected (for example, audio loss may be caused during an ongoing call of the terminal device), and user experience is degraded.

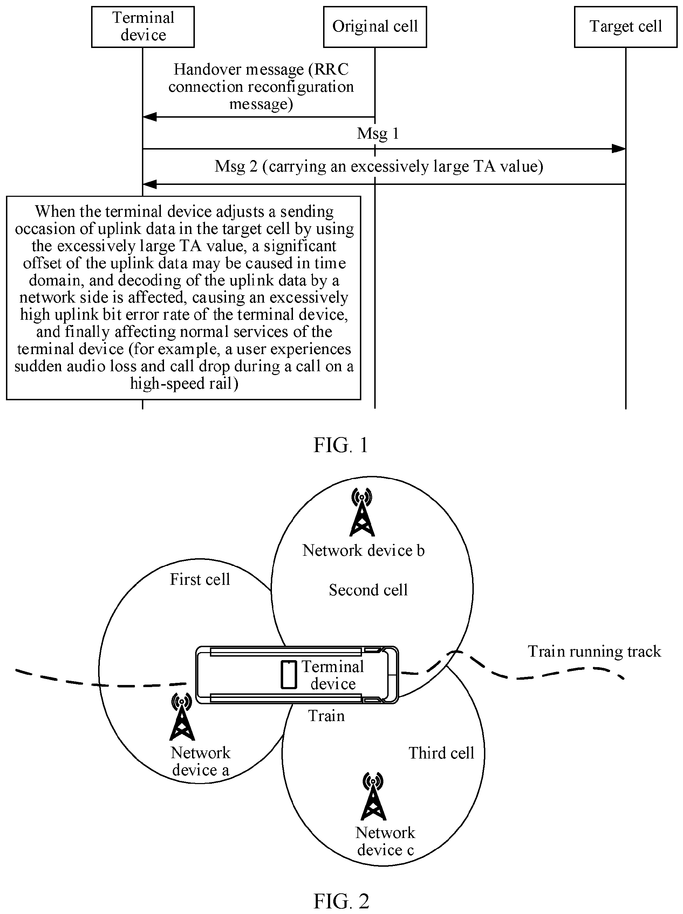

For example, when the terminal device camps on a high-speed rail cell or a subway cell (that is, the original cell is a high-speed rail cell or a subway cell), the terminal device may receive a handover message (for example, an RRC connection reconfiguration message) from a network device corresponding to the high-speed rail cell or the subway cell, and the handover message is used for indicating the terminal device to be handed over to the target cell. As shown in FIG. 1, after receiving the handover message from the original cell, the terminal device may initiate random access to the target cell based on the handover message, that is, may send the random access preamble (the random access preamble may also be referred to as an Msg 1) to a network device corresponding to the target cell. After receiving the random access preamble sent by the terminal device, the network device corresponding to the target cell may calculate a timing advance (timing advance, TA) value based on the random access preamble, and may send a random access response message (the random access response message may also be referred to as an Msg 2) carrying the TA value to the terminal device. After receiving the random access response message (Msg 2), the terminal device may adjust a sending occasion of the uplink data based on the TA value carried in the Msg 2. However, when camping on the high-speed rail cell or the subway cell, the terminal device is usually in a high-speed moving state. After the network device corresponding to the target cell receives the random access preamble (Msg 1) sent by the terminal device in the high-speed moving state, there is a probability that a deviation occurs in calculation of the TA value, resulting in an excessively large TA value carried in the Msg 2. If the terminal device adjusts the sending occasion of the uplink data in the target cell by using the excessively large TA value, a significant offset of the uplink data may be caused in time domain, and decoding of the uplink data by the network side is affected. Consequently, an ongoing service of the terminal device is affected (for example, a user experiences sudden call drop and audio loss during a call on a high-speed rail), and user experience is degraded.

Embodiments of this application provide a random access method, to reduce impact on an ongoing service of a terminal device, and improve service quality, thereby improving user experience.

To better understand a communication method and a related device according to embodiments of this application, a network architecture in embodiments of this application is described below.

The network architecture in embodiments of this application may include at least two cells (for example, a first cell and a second cell) and at least one terminal device.

For example, refer to FIG. 2. FIG. 2 is a schematic diagram of a network architecture according to an embodiment of this application. As shown in FIG. 2, the network architecture may include a terminal device, a first cell belonging to a network device a, a second cell belonging to a network device b, and a third cell belonging to a network device c. As shown in FIG. 2, a cell on which the terminal device currently camps may be the first cell. A moving track of the terminal device may be moving from the first cell to the second cell/the third cell. The second cell and the third cell may be neighboring cells (that is, adjacent cells) of the first cell. The terminal device may be located on a train (for example, a high-speed rail or a subway). The first cell, the second cell, and the third cell may be high-speed rail cells or subway cells.

It may be understood that the network architecture according to this embodiment of this application may further include more cells. This is not limited in this application. In some embodiments of this application, one network device may correspond to one or more cells. The first cell, the second cell, and the third cell may belong to a same network device. In other words, the network device a, the network device b, and the network device c may be a same network device. In this case, the terminal device performs intra-network device handover. Optionally, the first cell, the second cell, and the third cell may belong to network devices that are not completely the same. In other words, the network device a, the network

device b, and the network device c may be network devices that are not completely the same. The first cell, the second cell, and the third cell belong to the network devices that are not completely the same, which may specifically include: a network device to which the first cell belongs, a network device to which the second cell belongs, and a network device to which the third cell belongs, at most two of which are the same.

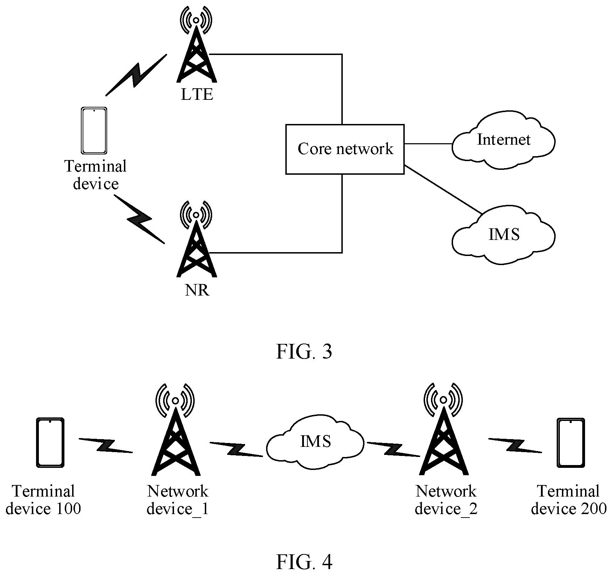

Refer to FIG. 3. FIG. 3 is a schematic diagram of another network architecture according to an exemplary embodiment of this application. As shown in FIG. 3, the network architecture may include a terminal device, LTE, NR, a core network, and IMS or the Internet (Internet). The following describes the network architecture in detail.

(1) Terminal device: The terminal device may be a device that includes a wireless transceiver function and that can cooperate with a network device (for example, a base station) to provide a communication service for a user. The terminal device may be a mobile phone, a wearable device (such as a smart watch), or the like.

(2) LTE: It may be understood as a wireless access network of a fourth generation ($4^{th}$ generation, 4G) mobile communication system. In an LTE network (that is, commonly referred to as a 4G network), because of an evolution relationship, an access network part is referred to as an evolved UMTS terrestrial radio access network (Evolved UMTS Terrestrial Radio Access Network, E-UTRAN). In this application, a meaning of LTE is the same as a meaning of E-UTRAN, and both LTE and E-UTRAN refer to the access network part of the 4G network. The terminal device may access LTE through a 4G base station. The 4G base station may be an evolved NodeB (evolved NodeB, eNB, or eNodeB) in long term evolution (long term evolution, LTE).

(3) NR: It may be understood as a wireless access network of a fifth generation ($5^{th}$ generation, 5G) mobile communication system. In a 5G network, an access network part is referred to as a next generation radio access network (Next Generation Radio Access Network, NG-RAN, or NG RAN). In this application, a meaning of NR is the same as a meaning of NG-RAN (or referred to as NG RAN), and both NR and NG-RAN refer to the access network part of the 5G network. The terminal device may access NR through a 5G base station. The 5G base station may be a next generation base station (gNodeB, gNB) in new radio (new radio, NR). The base station in NR may also be referred to as a transmission reception point (transmission reception point, TRP).

It may be understood that, both LTE and NR are access networks. The access network is responsible for aggregating most end users (End User) level by level to the core network (also referred to as a backbone network) by using a wired or wireless connection and communication technology, to implement a connection to the network. The access network is an edge part of the entire network and a part closest to a user, which is generally referred to as "last mile".

(4) Core network: The core network has main functions of providing a user connection, managing a user, and bearing a service, and serves as a bearer network to provide an interface to an external network. The establishment of the user connection includes functions such as mobility management (MM), call management (CM), switching/routing, and recording notification (completing a connection relationship to an intelligent network peripheral device with reference to an intelligent network service).

It may be understood that, a core network of the 4G network is an evolved packet core (evolved packet core, EPC) network. The EPC network is the core network of the 4G mobile communication network. The EPC network belongs to the scope of the core network, has conventional mobile network capabilities such as user subscription data storage, mobility management, and data exchange, and can provide ultra-high-speed Internet experience for the user. A core network of the 5G network is a 5G Core (5GC for short). 5GC may replace a dedicated communication device of the 4G network with a general-purpose network function virtualization device.

It should be noted that the core network in the network architecture shown in FIG. 3 may be obtained through convergence of EPC and 5GC. In other words, the core network in the network architecture may include a network element in EPC, and may include a network element in 5GC. For example, the core network in the network architecture may include an access and mobility management function (access and mobility management function, AMF) network element, a mobility management node (mobility management entity, MME) network element, a serving gateway (serving gateway, SGW) network element, a packet data network gateway (packet data network gateway, PGW) network element, a session management function (session management function, SMF) network element, a user plane function (user plane function, UPF) network element, a unified data management (unified data management, UDM) network element, a home subscriber server (home subscriber server, HSS) network element, and the like.

In some embodiments of this application, the core network in the network architecture may include a converged network element obtained from the network element in EPC and the network element in 5GC. For example, SMF+PGW-C, UPF+PGW-U, and UDM+HSS are provided. PGW-C is a control plane node of the PGW network element, and PGW-U is a user plane node of the PGW network element.

In some embodiments of this application, the core network in the network architecture shown in FIG. 3 may include a proxy session border control (proxy session border control, PSBC) network element, which is an integrated network element combining session border control (session border control, SBC), a proxy call session control function (Proxy-CSCF, P-CSCF), an access transfer control function (access transfer control function, ATCF), and an access

transfer gateway (access transfer gateway, ATGW). As an SBC network element, it connects an IMS core network/a softswitch network with an external user access area, to enable service access for an IMS/softswitch user, implement interworking of user services in different network environments, ensure security of the IMS/softswitch network, and support functions such as QoS management, CAC call admission control, media management, and CDR call detail record for media calls.

Each network element in the core network may also be referred to as a functional entity, which may be a network element implemented on dedicated hardware, or may be a software instance run on dedicated hardware, or may be an instance of a virtualization function on an appropriate platform.

It should be understood that names of all the network elements in this application are merely used as examples. In future communication, for example, in 6G, the names may be referred to as other names. Alternatively, in future communication, for example, in 6G, the network element involved in this application may be replaced with another entity or device having a same function. This is not limited in this application. This is uniformly described herein, and details are not described below again. Optionally, the network elements in this embodiment of this application may be communication devices, or may be chips or chip systems that may be used in the communication devices. This is not limited in embodiments of this application.

It may be understood that the core network in the network architecture shown in FIG. 3 may further include another device, network element, network entity, or network subsystem, for example, a policy control function (policy control function, PCF) network element. This is not limited in this application. It should be noted that a distribution manner of each network element in the core network is not limited in this application. For the distribution manner, refer to a related technical document. Details are not described herein again.

(5) IMS is a network architecture that provides voice and multimedia communication services (such as a voice message, a video, and a text message) based on an internet protocol (internet protocol, IP) network. IMS may implement secure and reliable multimedia communication between different devices of different networks. The architecture model provides a unified infrastructure and a general mechanism, for controlling, operating, routing, and managing sessions, and implementing identity authentication, authorization, and accounting control. The IMS specification includes a widely used internet engineering task force (internet engineering task force, IETF) recommendation. For example, a session initialization protocol (session initialization protocol, SIP) used for session control signaling is provided.

Internet generally refers to the Internet, and is also referred to as an international network, which refers to a vast network formed by interconnecting networks. These networks are connected by using a group of common protocols, to form a logically single and vast international network. From a perspective of network communication, Internet is a data communication network that connects computer networks across various countries, regions, and institutions globally by using a transmission control protocol (transmission control protocol, TCP)/Internet protocol.

It should be noted that the network architecture shown in FIG. 3 is not limited to only including the device and the network shown in the figure, and may further include other devices not shown in the figure, which are not described by way of example in this application.

The network device a, the network device b, and the network device c in FIG. 2 belong to LTE or NR in FIG. 3. For example, the network device a, the network device b, and the network device c may be the 4G base station (for example, eNB) or the 5G base station (for example, gNB). The first cell, the second cell, and the third cell in FIG. 2 may be LTE cells or NR cells.

Refer to FIG. 4. FIG. 4 is a schematic diagram of a voice call scenario according to an embodiment of this application. As shown in FIG. 4, a terminal device 100 may perform voice data transmission with a terminal device 200 through a network device_1, an IMS, and a network device_2. The network device_1 is a network device corresponding to a cell on which the terminal device 100 currently camps, and the network device_2 is a network device corresponding to a cell on which the terminal device 200 currently camps. In some embodiments of this application, the network device_1 and the network device_2 may be a same network device. In some embodiments of this application, the terminal device 100 may be a party initiating a voice call, to request to perform a voice call with the terminal device 200. In some other embodiments of this application, the terminal device 200 may be a party initiating a voice call, to request to perform a voice call with the terminal device 100.

The network device in embodiments of this application may be a device configured to communicate with the terminal device. For example, the network device may be a base station.

The terminal device in FIG. 2 may be the terminal device 100 or the terminal device 200 in FIG. 4. The network device a, the network device b, and the network device c in FIG. 2 may be the network device_1 or the network device_2 in FIG. 4. The first cell, the second cell, and the third cell in FIG. 2 may be cells covered by the network device_1 or the network device_2.

The technical solution of embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), an LTE

system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solution in embodiments of this application may be further applied to another communication system, for example, a public land mobile network (public land mobile network, PLMN) system. This is not limited in embodiments of this application.

The terminal device in embodiments of this application may also be referred to as a terminal (terminal), user equipment (user equipment, UE), a user terminal, a mobile station (mobile station, MS), a mobile terminal (mobile terminal, MT), or the like. The terminal device may be a handheld terminal, a notebook computer, a subscriber unit (Subscriber Unit), a cellular phone (Cellular Phone), a smart phone (Smart Phone), a wireless data card, a personal digital assistant (Personal Digital Assistant, PDA) computer, a tablet computer, a wireless modem (modem), a handheld (handheld) device, a laptop computer (Laptop Computer), a cordless phone (Cordless Phone) or a wireless local loop (wireless local loop, WLL) station, a machine type communication (machine type communication, MTC) terminal, a wearable device (for example, a smart watch, a smart bracelet, or a pedometer), an in-vehicle device (for example, a car, a bicycle, an electric vehicle, an airplane, a ship, a train, or a high-speed rail), a virtual reality (Virtual Reality, VR) device, an augmented reality (Augmented Reality, AR) device, a wireless terminal in industrial control (Industrial Control), a smart home device (for example, a refrigerator, a television, an air conditioner, or an electric meter), a smart robot, a workshop device, a wireless terminal in self driving (Self Driving), a wireless terminal in a remote medical surgery (Remote Medical Surgery), a wireless terminal in a smart grid (Smart Grid), a wireless terminal in transportation safety (Transportation Safety), a wireless terminal in smart city (Smart City), a wireless terminal in smart home (Smart Home), a flying device (for example, a smart robot or an unmanned aerial vehicle), a wireless terminal in a 5G network or a future communication network, or the like. This is not specifically limited in embodiments of this application.

The network device in embodiments of this application may be a device configured to communicate with the terminal device. For example, the network device may be a base transceiver station (base transceiver station, BTS) in a GSM system or a CDMA system, or may be a base station (NodeB, NB) in a WCDMA system, or may be eNB or eNodeB in an LTE system, or may be a wireless controller in a cloud radio access network (cloud radio access network, CRAN) scenario. Alternatively, the network device may be a relay station, an access point, an in-vehicle device, a wearable device, a network device in a future 5G network or a post-5G network, a network device in a future evolved PLMN network, or the like, for example, a transmission point (TRP or TP) in an NR system, a base station (gNB) in the NR system, or one or a group of antenna panels (including a plurality of antenna panels) of a base station in a 5G system. This is not limited in embodiments of this application.

Optionally, the base station in embodiments of this application may include various forms of base stations, for example, a macro base station, a micro base station (also referred to as a small station), a relay station, an access point, gNB, a transmission point (transmitting and receiving point, TRP), a transmitting point (transmitting point, TP), a mobile switching center, and a device that undertakes a base station function in device-to-device (device-to-device, D2D), vehicle-to-everything (vehicle-to-everything, V2X), and machine-to-machine (machine-to-machine, M2M) communication, and the like. This is not specifically limited in embodiments of this application.

A specific structure of an execution body of the method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be a terminal device or a network device, or a functional module that is in the terminal device or the network device and that can invoke a program and execute the program.

The technical solutions in embodiments of this application are clearly and completely described below with reference to the accompanying drawings in embodiments of this application. In the descriptions of embodiments of this application, "/" means or, unless otherwise specified. For example, A/B may represent A or B. A term "and/or" herein describes only an association relationship for describing associated objects and represents that three relationships may exist. For example, A and/or B may represent the following three cases: A alone, both A and B, and B alone. In addition, in the descriptions of embodiments of this application, "a plurality of" refers to two or more.

It should be understood that the terms "first", "second", and the like in the specification, claims, and accompanying drawings of this application are used for distinguishing between different objects, and are not used for describing a specific sequence. In addition, the terms "include", "have" and any variants thereof are intended to cover a non-exclusive inclusion. For example, a process, a method, a system, a product, or a device including a series of steps or units is not limited to the listed steps or units, but instead, optionally includes steps or units that are not listed, or optionally includes other steps or units inherent to the process, method, product, or device.

An "embodiment" mentioned in this application means that specific features, structures, or characteristics described with reference to this embodiment may be included in at least one embodiment of this application. The term

appearing in different parts of the specification does not necessarily refer to the same embodiment or an independent or alternative embodiment exclusive of other embodiments. A person skilled in the art can clearly and implicitly understand that embodiments described in this application can be combined with other embodiments.

For ease of understanding, the following specifically describes the random access method provided in embodiments of this application with reference to the accompanying drawings.

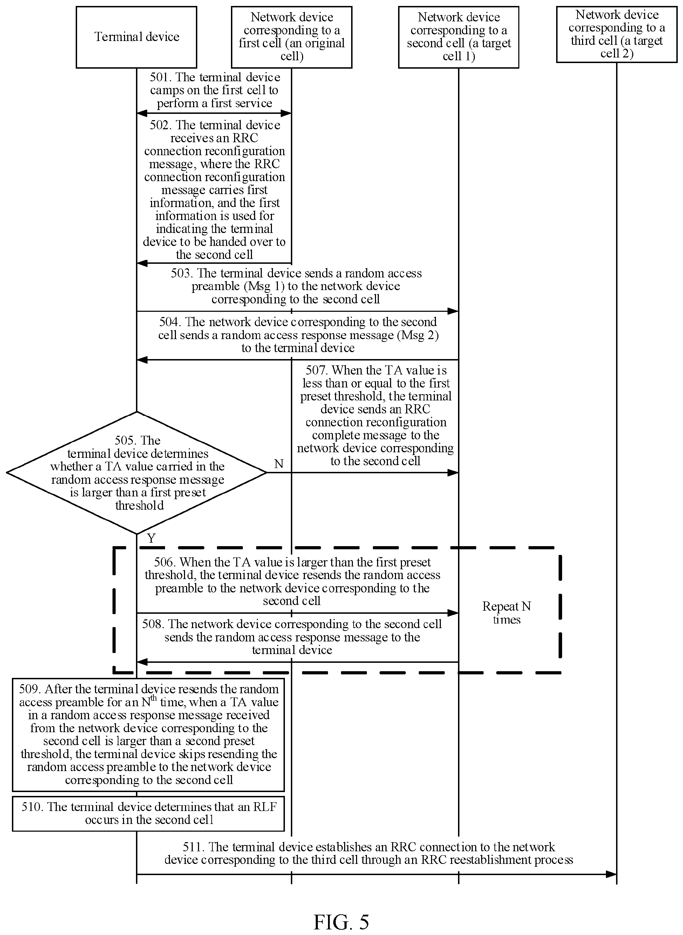

As shown in FIG. 5, an embodiment of this application provides a random access method, including the following steps.

501. A terminal device camps on a first cell to perform a first service.

In other words, a current serving cell of the terminal device is the first cell. The first cell may also be referred to as an original cell/source cell of the terminal device.

The terminal device may camp on the first cell to perform the first service. The first service may include a voice service or a data service. The voice service includes a telephone service (for example, making a call). The data service may include a service such as webpage browsing, an online game, or video/short video playback. This is not specifically limited in this application.

In some embodiments, the terminal device may report an event A2 to a network device corresponding to the first cell when signal strength of the first cell is lower than a preset threshold, so that the network device configures events used for handover for a user.

The events used for handover may include the following events.

Event A3: It indicates that signal quality of a neighbor cell is better than that of the first cell, to determine whether the terminal device is handed over to the neighbor cell.

Event A4: It indicates that signal quality of a neighbor cell is better than an absolute threshold, to determine whether the terminal device is handed over to the neighbor cell.

Event A5: It indicates that signal quality of the first cell is worse than an absolute threshold 1 and signal quality of a neighbor cell is better than an absolute threshold 2, to determine whether the terminal device is handed over to the neighbor cell.

The events A3 to A5 are three events used by an LTE system or an NR system to perform measurement on a same system.

Event B1: It indicates that signal quality of a neighbor cell is better than an absolute threshold, to measure a high-priority RAT cell.

Event B2: It indicates that signal quality of the first cell is worse than an absolute threshold 1, and signal quality of a neighbor cell is better than an absolute threshold 2, to measure a same-priority RAT cell or a low-priority RAT cell.

The event B1 and the event B2 are two events used by the LTE system or the NR system to perform inter-system measurement.

When the terminal device is in a connected mode, the network device (for example, a base station) corresponding to the first cell may configure the event (for example, the event A3, the event A4, the event A5, the event B1, or the event B2) used for handover for the terminal device. The terminal device reports, based on the configured event, a measurement result to the network device corresponding to the first cell. The network device corresponding to the first cell may send an RRC connection reconfiguration message to the terminal device based on the measurement result, to indicate the terminal device to be handed over to a second cell.

502. The terminal device receives the RRC connection reconfiguration message sent by the network device corresponding to the first cell.

When camping on the first cell, the terminal device may receive an RRC connection reconfiguration message (RRC Connection Reconfiguration) sent by a network device a. The network device a is the network device (a first network device) corresponding to the first cell, for example, may be the base station.

The RRC connection reconfiguration message carries first information, where the first information is used for indicating the terminal device to be handed over to the second cell. The second cell may be referred to as a target cell of the terminal device. To distinguish the second cell from the following third cell (a third cell in step 511), the second cell may be referred to as a target cell 1 of the terminal device, and the following third cell may be referred to as a target cell 2 of the terminal device.

The first information may include a mobilityControlInfo information element. The mobilityControlInfo information element is used for indicating the terminal device to be handed over to the second cell.

For example, the mobilityControlInfo information element may include fields such as an ID of the second cell, a carrier frequency, a bandwidth, an identifier of the terminal device, and parameters of physical channels.

In some embodiments, when camping on the first cell to perform the first service (for example, the voice service or the data service), the terminal device may receive the RRC connection reconfiguration message from the network device corresponding to the first cell.

In some embodiments, when camping on the first cell, the terminal device may be in a high-speed moving state. That the terminal device is in a high-speed moving state includes: displacement of the terminal device in a preset time

period is greater than a first preset threshold value, and/or an average speed/acceleration of the terminal device in the preset time period is greater than a second preset threshold value.

For example, the terminal device may detect an acceleration/speed of the terminal device in a horizontal direction by using an acceleration sensor. The terminal device may obtain a geographic location of the terminal device by using a positioning system (a GPS or a BeiDou navigation satellite system), and determine the displacement of the terminal device based on geographic locations at different moments.

In a possible case, misjudgment may be caused when the terminal device determines a status of the terminal device based on data collected by the acceleration sensor. For example, if the terminal device linearly moves at a constant speed, and the acceleration sensor detects that the acceleration of the terminal device in the horizontal direction is 0, the status of the terminal device cannot be accurately determined. In this case, the terminal device may determine, by using both the acceleration sensor and the positioning system, whether the terminal device is in the high-speed moving state. For example, when it is detected that a change in output data of the positioning system in a recent period of time is large, and an acceleration value is zero or less than a threshold value, it is determined that the terminal device is in the high-speed moving state.

In some embodiments, the first cell is a high-speed rail cell or a subway cell.

The high-speed rail cell may also be referred to as a high-speed rail communication cell, and refers to a cell covering a high-speed rail track. The subway cell may also be referred to as a subway communication cell, and refers to a cell covering a subway tunnel.

In some embodiments, the terminal device may determine, based on a highSpeedFlag field in a SIB message (for example, SIB2), whether the cell (for example, the first cell) is an LTE high-speed rail cell. Alternatively, the terminal device may determine, based on a highSpeedMeasFlag field in a SIB message (for example, SIB1), whether the cell is an NR high-speed rail cell.

In some other embodiments, the terminal device may obtain geographical location information (for example, longitude and latitude information) of the first cell by using the positioning system (for example, the GPS or the BeiDou navigation satellite system), and determine whether the first cell is the high-speed rail cell or the subway cell based on the geographical location information of the first cell. For example, the terminal device may compare the geographical location information of the first cell with geographical location information corresponding to a high-speed rail line or a subway line. If the geographical location information of the first cell matches the geographical location information corresponding to the high-speed rail line or the subway line in other words, the geographical location information corresponding to the high-speed rail line or the subway line includes the geographical location information of the first cell), the terminal device determines that the first cell is the high-speed rail cell or the subway cell. The geographical location information corresponding to the high-speed rail line or the subway line may be obtained by the terminal device from the network device, or may be stored in the terminal device in advance. This is not specifically limited in this embodiment of this application.

In some embodiments, before/after the terminal device is handed over to the second cell, the terminal device may be in the high-speed moving state.

In some embodiments, the second cell is a high-speed rail cell or a subway cell. For a method in which the terminal device identifies whether the second cell is the high-speed rail cell or the subway cell, refer to the method in which the terminal device identifies whether the first cell is the high-speed rail cell or the subway cell. Details are not described herein again.

In some embodiments, the first cell is an LTE cell, and the second cell is an LTE cell. Alternatively, the first cell is an NR cell, and the second cell is an NR cell. In other words, handover of the terminal device from the first cell to the second cell may be intra-system cell handover. In some other embodiments, the first cell is an LTE cell, and the second cell is an NR cell. Alternatively, the first cell is an NR cell, and the second cell is an LTE cell. In other words, handover of the terminal device from the first cell to the second cell may be inter-system cell handover.

503. The terminal device sends a random access preamble to a network device corresponding to the second cell.

The terminal device may send the random access preamble to a second network device b (a second network device) based on the first information in the RRC connection reconfiguration message. The network device b is the network device corresponding to the second cell.

The random access preamble may be referred to as an Msg 1 (message1, that is, message 1), or may be referred to as a preamble for short. This is not specifically limited in this application.

The terminal device may send the random access preamble based on a preamble association parameter. The preamble association parameter includes a preamble received target power (PREAMBLE RECEIVED TARGET POWER), a preamble transmission counter (PREAMBLE TRANSMISSION COUNTER), a preamble power ramping counter (PREAMBLE POWER RAMPING COUNTER), and the like. The preamble association parameter may be configured through higher layer signaling.

The terminal device determines, based on the preamble transmission counter, whether to send the random access preamble. For example, the terminal device determines whether a value of the preamble transmission counter is

less than a preset maximum value. If the value of the preamble transmission counter is less than the maximum value, the terminal device may send the random access preamble.

If the terminal device determines to send the random access preamble, the terminal device may determine a sending power of the random access preamble based on the preamble received target power and the value of the preamble power ramping counter.

For example, the sending power of the random access preamble may be determined according to formula (1):

$$P_{\mathrm{PRACH},\,b,f,\,c}(i)=\min\left\{P_{\mathrm{CMAX},f,\,c}(i),\,P_{\mathrm{PRACH,\,target},f,\,c}+PL_{b,f,\,c}\right\}\quad \text{Formula (1)}$$

$P_{\mathrm{PRACH},b,f,c}(i)$ is a maximum sending power of the terminal device in a transmission time unit i, $P_{\mathrm{PRACH,target},f,c}$ is a first preamble received target power, $PL_{b,f,c}$ is path loss estimated based on a downlink reference signal, *b* represents a BWP sequence number, *f* represents a carrier sequence number, and *c* represents a sequence number of a serving cell.

$P_{\mathrm{PRACH,target},f,c}$ = preambleReceivedTargetPower + DELTA PREAMBLE + (PREAMBLE POWER RAMPING COUNTER - 1) × PREAMBLE POWER RAMPING STEP

preambleReceivedTargetPower is an initial received target power of the random access preamble. DELTA PREAMBLE is a power ramping step determined based on a format of the random access preamble, or a format of the random access preamble and a sub-carrier spacing. PREAMBLE POWER RAMPING COUNTER is the preamble power ramping counter, used for representing a quantity of power ramping steps for retransmission of the random access preamble. The value is determined by the quantity of power ramping steps for retransmission of the random access preamble based on whether a sending-side filter coefficient or a downlink path loss reference signal resource (an SSB or a CSI-RS) associated with the random access preamble changes. PREAMBLE POWER RAMPING STEP is a power ramping step interval.

504. The network device corresponding to the second cell sends a random access response message to the terminal device.

The network device corresponding to the second cell may receive, on a corresponding PRACH resource, the random access preamble sent by the terminal device.

After receiving the random access preamble sent by the terminal device, the network device corresponding to the second cell may calculate, based on the random access preamble, a timing advance (timing advance, TA) value corresponding to the terminal device.

The TA value is used for indicating, to the terminal device, timing advances by which adjustment needs to be performed on a physical uplink shared channel (physical uplink shared channel, PUSCH), a physical uplink control channel (physical uplink Control channel, PUCCH), and a sounding reference signal (sounding reference signal, SRS).

It may be understood that, in a wireless communication system, an uplink frame is sent to the network device (for example, the base station) through a UE, and a downlink frame is transmitted by the network device to the UE. To ensure synchronization between the uplink frame and the downlink frame in time domain, sending time of the uplink frame of the terminal device needs to be adjusted. The sending time of the uplink frame of the terminal device may be adjusted based on the TA value, to ensure synchronization between the uplink frame and the downlink frame in time domain.

The network device may send the random access response (random access response, RAR) message to the terminal device. The random access response message may also be referred to as an Msg 2 (message 2, message 2). The random access response message may include the TA value.

As shown in FIG. 6, the TA value may be carried in a timing advance command (timing advance command, TAC) field in the RAR message, and the TAC field includes 12 bits (bits). The TA value may range from 0 to 3846.

Optionally, the RAR message may further include information such as a temporary cell radio network temporary identity (temporary cell radio network temporary identity, TC-RNTI) and uplink grant (UL (uplink) grant). This is not limited in this application.

505. The terminal device determines whether the TA value carried in the random access response message is greater than a first preset threshold.

After receiving the random access response message (Msg 2) sent by the network device corresponding to the second cell, the terminal device may parse the Msg 2 to obtain the TA value, and determine whether the TA value carried in the Msg 2 is greater than the first preset threshold.

When the terminal device camps on the high-speed rail cell or the subway cell (that is, the original cell of the terminal device is the high-speed rail cell or the subway cell), the terminal device is usually in the high-speed moving state,

and a distance between the terminal device and the network device corresponding to the target cell (the target cell 1, that is, the second cell) changes greatly within short duration. As a result, a large error may be generated (that is, an exception occurs) when the network device corresponding to the second cell calculates the TA value of the terminal device. For example, the TA value of the terminal device calculated by the network device corresponding to the second cell is excessively large (for example, the TA value is greater than the first preset threshold value). If the terminal device sends uplink data in the second cell by using the excessively large TA value, a problem that the uplink data sent by the terminal device in the target cell cannot be normally decoded by a network side may occur. Consequently, an uplink bit error rate of the terminal device is excessively high, normal services of the terminal device are affected (for example, audio loss may be caused during an ongoing call of the terminal device), and user experience is degraded. Therefore, when the terminal device camps on the high-speed rail cell or the subway cell, that is, when the first cell is the high-speed rail cell or the subway cell, for a random access procedure triggered due to cell handover, the terminal device can verify the TA value in the Msg 2. In other words, whether the TA value carried in the random access response message is greater than the first preset threshold is determined. If the TA value is greater than the first preset threshold, step 506 may be performed. If the TA value is less than or equal to the first preset threshold, step 507 may be performed.

506. When the TA value is greater than the first preset threshold, the terminal device resends the random access preamble to the network device corresponding to the second cell.

When the TA value is greater than the first preset threshold, the terminal device may discard the random access response message (Msg 2) sent by the network device corresponding to the second cell, and resend the random access preamble to the network device corresponding to the second cell. This case may be understood as that, the terminal device ignores the excessively large TA value (that is, the TA value greater than the first preset threshold) in the Msg 2 delivered for the first time by the network device corresponding to the second cell, and re-requests a TA value from the network device corresponding to the second cell.

Because the excessively large TA value carried in the Msg 2 is a probabilistic phenomenon, to reduce a probability that the TA value carried in the Msg 2 is excessively large, the terminal device may ignore the received excessively large TA value, and resend the Msg 1 to request a new TA value, so as to obtain a normal TA value. In this way, the terminal device can send the uplink frame based on the normal TA value, thereby avoiding a persistent high uplink bit error rate problem in the terminal device, avoiding affecting the voice service or the data service, and improving user experience. The normal TA value is a TA value within a suitable value range. For example, the normal TA value is less than or equal to the first preset threshold.

507. When the TA value is less than or equal to the first preset threshold, the terminal device sends an RRC connection reconfiguration complete message to the network device corresponding to the second cell.

When the TA value carried in the random access response message (Msg 2) is less than or equal to the first preset threshold, the terminal device does not need to discard the random access response message (Msg 2). The terminal device may send the RRC connection reconfiguration complete (RRC Connection Reconfiguration complete) message to the network device corresponding to the second cell. The RRC connection reconfiguration complete message may indicate that the terminal device has completed the random access procedure.

When the TA value is less than or equal to the first preset threshold, the TA value is considered to be within a suitable value range (that is, the TA value is the normal TA value). In this way, the terminal device can send the uplink frame based on the normal TA value, thereby avoiding a persistent high uplink bit error rate problem in the terminal device, avoiding affecting the voice service or the data service, and improving user experience.

In this embodiment of this application, after step 506, step 508 may be further included.

508. The network device corresponding to the second cell sends the random access response message to the terminal device.

The network device corresponding to the second cell may resend the random access response message to the terminal device after receiving the random access preamble that is resent by the terminal device for the first time (that is, the random preamble sent by the terminal device in step 506).

After the network device corresponding to the second cell resends the random access response message to the terminal device, and after the terminal device receives the resent random access response message, if it is determined that the TA value carried in the resent random access response message is greater than the first preset threshold, step 506 may be performed again. Step 506 and step 508 may be cyclically performed for N times, where N is an integer greater than or equal to 1.

In this way, the terminal device ignores the received excessively large TA value for a plurality of times (for example, N times), and resends the Msg 1 to request a new TA value, to obtain a normal TA value. In this way, the terminal device can send the uplink frame based on the normal TA value, thereby avoiding a persistent high uplink bit error rate problem in the terminal device, avoiding affecting the voice service or the data service, and improving user experience.

509. After the terminal device resends the random access preamble for the $N^{th}$ time, when the TA value in the random access response message received from the network device corresponding to the second cell is greater than a second preset threshold, the terminal device skips resending the random access preamble to the network device

corresponding to the second cell.

For example, it is assumed that N is 2. In step 505, if the terminal device determines that the TA value carried in the random access response message is greater than the first preset threshold, the terminal device may resend the random access preamble (for example, a preamble 1) for the first time to the network device corresponding to the second cell. After receiving the random access preamble (for example, the preamble 1) resent by the terminal device for the first time, the network device may resend the random access response message (for example, a random access response message 1) to the terminal device. After receiving the random access response message (for example, the random access response message 1), if it is determined that the TA value carried in the random access response message is greater than the second preset threshold, the terminal device may resend the random access preamble (for example, a preamble 2) for the second time to the network device corresponding to the second cell. After receiving the random access preamble resent by the terminal device for the second time, the network device may resend the random access response message (for example, a random access response message 2) to the terminal device. After receiving the random access response message (for example, the random access response message 2), if it is determined that the TA value carried in the random access response message is greater than the second preset threshold, the terminal device skips resending the random access preamble for the third time to the network device corresponding to the second cell.

In this way, a scenario in which the TA value actually required by the terminal device in the second cell is large (for example, the TA value actually required by the terminal device in the second cell needs to be greater than the second preset threshold value) is compatible. In other words, after resending the random access preamble for the $N^{th}$ time, the terminal device may no longer ignore the large TA value when the TA value in the random access response message received from the network device corresponding to the second cell is still greater than the second preset threshold. In addition, a sending occasion of the uplink frame is adjusted based on the large TA value in a subsequent uplink transmission process.

In some embodiments, after resending the random access preamble for the $N^{th}$ time, when the received TA value in the random access response message sent by the network device corresponding to the second cell is greater than the second preset threshold, the terminal device may record correspondence between the second cell and the excessively large TA value (where the TA value is greater than the first preset threshold or the second preset threshold) received by the terminal device in the second cell. In this way, when next time the terminal device needs to be handed over to the second cell, the terminal device may directly use the excessively large TA value indicated by the network device corresponding to the second cell, and does not need to frequently resend the random access preamble. In this way, the scenario in which the TA value actually required by the terminal device in the second cell is large (for example, the TA value actually required by the terminal device in the second cell needs to be greater than the second preset threshold value) is compatible, and information exchange duration can also be reduced. In addition, a problem that subsequent uplink data sent by the terminal device cannot be normally decoded by the network side can be avoided, so that normal services of the terminal device are not affected.

In some embodiments, a value of the second preset threshold may be the same as or different from a value of the first preset threshold. In some other embodiments, a value of the second preset threshold may be different from a value of the first preset threshold.

After resending the random access preamble for the $N^{th}$ time, the terminal device may send the RRC connection reconfiguration complete message to the network device corresponding to the second cell. The RRC connection reconfiguration complete message may indicate that the terminal device has completed the random access procedure.

Optionally, the method provided in this embodiment of this application may further include the following steps.

510. The terminal device determines that an RLF occurs in the second cell.

In some embodiments, after resending the random access preamble for the $N^{th}$ time, when the received TA value in the random access response message sent by the network device corresponding to the second cell is greater than the second preset threshold, the terminal device determines that the radio link failure (radio link failure, RLF) occurs in the second cell. In this case, the terminal device may perform cell reselection. For example, the terminal device may reselect to the third cell. The third cell may be referred to as the target cell 2.

In some embodiments, after resending the random access preamble for the $N^{th}$ time, when the received TA value in the random access response message sent by the network device corresponding to the second cell is greater than the second preset threshold, the terminal device sends the RRC connection reconfiguration complete message to the network device corresponding to the second cell, to complete the random access procedure. Then, in the process in which the terminal device communicates with the second cell, the terminal device may adjust the sending occasion of the uplink frame based on the large TA value (that is, the TA value greater than the second preset threshold). In the process in which the terminal device communicates with the second cell, an RLF may occur on the terminal device. For example, if the terminal device has a problem of a high uplink bit error rate in the second cell, that is, an uplink bit error rate (a bit error rate (bit error ratio, BER) of uplink data sent in the second cell) of the terminal device exceeds a third preset threshold value, the terminal device determines that the RLF occurs in the second cell.

The uplink bit error rate is an indicator for measuring data transmission accuracy of uplink data within specified

duration. The uplink bit error rate = a quantity of bit errors in uplink transmission/a total quantity of bits transmitted in uplink transmission * 100%.

In some other embodiments, the terminal device may determine whether an RLF occurs on a link between the terminal device and the second cell based on an RLC retransmission count, an in-synchronization (in sync or in synchronization, IS)/out-of-synchronization (Out of sync or Out of synchronization, OoS) indication, a quantity of failed attempts to transmit service data by the terminal device, a random access (Random Access) result, a cell handover result, and an RRC reconfiguration result.

For example, if the RLC retransmission count on the link between the terminal device and the second cell by the terminal device reaches a maximum RLC retransmission count, it is considered that the RLF occurs in the second cell. For another example, if on the link between the terminal device and the second cell, the terminal device receives a preset quantity of continuous OoS indications in a preset time period, and the link is not recovered before a timer 310 expires (the timer T310 is started when detecting the preset quantity (for example, N310) of continuous OoS indications), it is considered that the RLF occurs in the second cell. For another example, if the quantity of failed attempts to send the service data to the second cell by the terminal device in a preset time period is greater than or equal to a preset failure count, the terminal device considers that the RLF occurs in the second cell. For another example, if a random access failure occurs, the terminal device considers that the RLF occurs in the second cell. For another example, if a handover failure (handover failure) occurs, that is, the terminal device cannot successfully access the second cell before a timer T304 expires (the timer T304 is started when the terminal device receives an RRC Connection Reconfiguration command and prepares the handover), the terminal device considers that the RLF occurs in the second cell. For another example, if the RRC reconfiguration fails, the terminal device considers that the RLF occurs in the second cell. The preset time, the preset failure count, and the preset quantity may be set according to a requirement, and may be specified in a protocol or configured by the network device. This is not limited in this application.

That the RLF occurs in the second cell may mean that the terminal device cannot normally perform data transmission with the second cell or the network device corresponding to the second cell, for example, uplink data transmission and/or downlink data transmission fails.

511. The terminal device establishes an RRC connection to a network device corresponding to a third cell through an RRC reestablishment process.

After the terminal device determines that the RLF occurs in the second cell, the terminal device may determine a new target cell (the target cell 2, that is, the third cell), and establish the RRC connection to the network device corresponding to the third cell. Because the terminal device is in a connected mode, the terminal device may establish the RRC connection to the network device corresponding to the third cell through the RRC reestablishment process.

In some embodiments, the terminal device may determine, as the third cell, a cell that meets a criterion S in at least one candidate cell (a cell found by the UE). The criterion S may be used for selection of an RRC reestablishment cell. It should be noted that the criterion S may alternatively be replaced with another criterion by which the RRC reestablishment cell can be selected, and the like. This is not limited in this application.

For example, that the terminal device determines, as the third cell, the cell that meets the criterion S in the at least one candidate cell (the cell found by the UE) may include: the terminal device determines whether the at least one candidate cell meets the criterion S, to obtain one or more cells that meet the criterion S; and if one cell that meets the criterion S is provided, the cell that meets the criterion S is determined as the third cell. Alternatively, a cell that has a signal (for example, an RSRP\RSRQ) whose quality is the best (or highest) in a plurality of cells that meet the criterion S is determined as the third cell.

In some embodiments, the third cell may be one of at least one cell adjacent to the first cell or the second cell. Optionally, the third cell is a cell that has a strongest signal in the at least one cell adjacent to the first cell or the second cell.

In some embodiments, the third cell is a high-speed rail cell or a subway cell.

In some embodiments, the third cell may be an LTE cell or an NR cell.

That the terminal device establishes an RRC connection to a network device corresponding to a third cell through an RRC reestablishment process includes: the terminal device sends an RRC reestablishment request (RRC restablishment request) message to the third cell, where the RRC reestablishment request message may be used for requesting to establish the RRC connection to the network device corresponding to the third cell. If the network device corresponding to the third cell accepts the RRC reestablishment request message sent by the terminal device, the network device corresponding to the third cell sends an RRC reestablishment message (RRC re-establishment) to the terminal device. The terminal device receives the RRC reestablishment message, and establishes the RRC connection to the network device corresponding to the third cell. After establishing the RRC connection to the network device corresponding to the third cell, the terminal device sends an RRC reestablishment complete message to the network device corresponding to the third cell.

For example, the RRC reestablishment request (RRC connection reestablishment request or RRC connection reestablishment request) may be generated by an RRC layer of the first terminal device, and the RRC layer of the first terminal device corresponds to an RRC layer of a radio access network device.

After establishing the RRC connection to the network device corresponding to the third cell, the terminal device may continue to perform the first service mentioned in step 501 through the RRC connection.

Based on the method according to this embodiment of this application, the terminal device may resend the Msg 1 to request a new TA value, and ignore the received excessively large TA value, to obtain a normal TA value. A problem that an excessively large TA value delivered by a network side affects an ongoing service (for example, a voice service or a data service) of the terminal device can be avoided, so that user experience can be improved.

In the related art, in some scenarios, a terminal (a terminal device) receives a handover command of a network side in an LTE cell, starts to initiate random access to a target cell, receives an Msg 2 of the network side after sending an Msg 1, and successfully accesses the target cell. However, uplink data subsequently sent by the terminal cannot be normally decoded by the network side, and consequently, normal services of the terminal are affected (for example, an ongoing call of the terminal may be muted).

The applicant finds in research that in a current network high-speed rail scenario, when the terminal device performs random access during cell handover, if an unusually large TA value is delivered by the network side, the terminal device has a persistent high uplink bit error rate problem after accessing the cell, and consequently, voice quality or a data service is affected. For example, a user experiences sudden audio loss and call drop during a call on a high-speed rail.

In the high-speed rail scenario, the terminal device receives the handover command of the network side in an LTE high-speed rail cell, starts to initiate random access to the target cell, receives the Msg 2 of the network side after sending the Msg 1, and successfully accesses the target cell. However, the TA value carried in the Msg 2 is extremely large, and consequently, uplink data subsequently sent by the terminal device cannot be normally decoded by the network side. As a result, normal services of the terminal device are affected.

The applicant finds in research that reasons of the foregoing problem include the following two points.

1. In a high-speed moving scenario, after the network side receives the Msg 1, there is a probability that a deviation occurs in estimation of the TA value, thereby causing the TA value carried in the Msg 2 to be excessively large.
2. When the terminal device uses the excessively large TA value in the target cell, a significant offset may be caused in time domain, and decoding of the uplink data by the network side is affected, causing a persistent high uplink bit error rate in the terminal device.

An embodiment of this application provides a method for improving performance of a terminal device. Because an excessively large TA value estimated on a network side is a probabilistic phenomenon, a terminal device may ignore a received excessively large TA value and resend an Msg 1 to resolve the problem or reduce a probability that the problem occurs.

An embodiment of this application provides a method for improving performance of a terminal device, which may include the following content.

(1) On a high-speed rail cell, for a random access procedure whose trigger reason is cell handover, a terminal device may add verification for a TA value in an Msg 2. As shown in FIG. 7, after receiving an RRC connection reconfiguration message from an original cell, a terminal (for example, a UE) may initiate random access to a target cell based on the RRC connection reconfiguration message, that is, may send an Msg 1 to a network device corresponding to the target cell. The network device corresponding to the target cell may calculate a TA value based on the Msg 1 after receiving the random access preamble sent by the terminal device, and may send the Msg 2 carrying the TA value to the terminal. If the TA value in the Msg 2 is greater than a preset threshold, the terminal may discard the Msg 2 (in this case, it may be understood that an excessively large TA value in the Msg 2 is ignored), and immediately resend the Msg 1.

Further, after resending the Msg 1, the terminal may receive an Msg 2 resent by a network side. If the TA value in the Msg 2 is still greater than the preset threshold, the terminal device may continue to discard the Msg 2 and resend the Msg 1.

In an optional implementation, the terminal may always resend the Msg 1 until the TA value carried in the received Msg 2 is less than or equal to the preset threshold. Then, the terminal may send an RRC connection reconfiguration complete message to the target cell.

The Msg 1 (message 1, message 1) and the Msg 2 (message 2, message 2) are both messages involved in a random access procedure. In the random access procedure, there is an important parameter in the Msg 2, that is, a TA (timing advance, timing advance). After receiving the Msg 1, the network side (for example, a base station) calculates an uplink TA based on the Msg 1. After receiving a random access response message (Msg 2), the terminal device may adjust an uplink sending occasion based on the TA value carried in the Msg 2.

(2) Further, optionally, to be compatible with a scenario in which a TA value that is actually needed is very large, if the TA value received by the terminal device for a plurality of times is still excessively large, the terminal device may no longer ignore the excessively large TA value in the received Msg 2. As shown in FIG. 8, after the terminal device resends

the Msg 1 for a plurality of times (using FIG. 8 as an example, it is assumed that the terminal device resends the Msg 1 twice), if the TA value in the received Msg 2 is still excessively large (for example, greater than the preset threshold, and the preset thresholds of the TA value in the received Msg 2 for the plurality of times may be the same or different), the terminal device may no longer ignore the excessively large TA value in the received Msg 2, that is, the terminal device may skip resending the Msg 1, and successfully access the target cell based on the Msg 2 (for example, the Msg 2 may be the received Msg 2 for the last time). The terminal may send the RRC connection reconfiguration complete message to the target cell.

Based on the method according to this embodiment of this application, a problem that audio is muted/data is unavailable due to a high error bit rate caused by the excessively large TA value delivered by the network side can be resolved, and user experience can be improved.

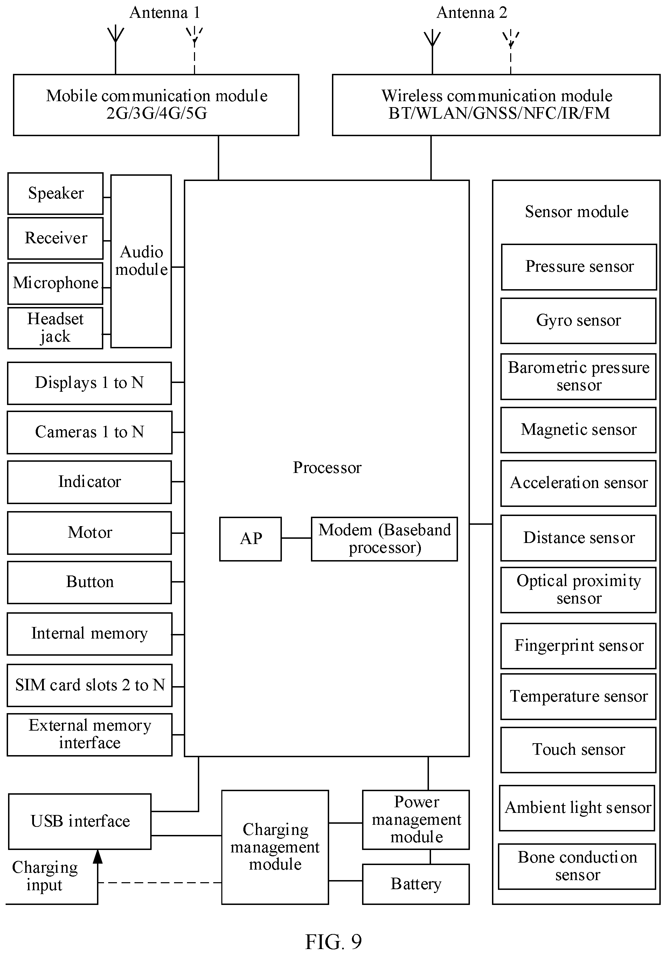

A hardware structure of the terminal device is shown in FIG. 9. The hardware structure may include: a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display screen, a SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in embodiments of this application does not constitute a specific limitation on the terminal device. In some other embodiments, the terminal device may include more or fewer components than those shown in the figure, or combine some components, or split some components, or have different component arrangements. The components shown in the figure may be implemented through hardware, software, or a combination of software and hardware.

The processor may include one or more processing units. For example, the processor may include an application processor (Application Processor, AP), a modem processor (Modem, which may also be referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU), and the like. Different processing units may be separate devices, or may be integrated into one or more processors. The processor is a nerve center and a command center of the terminal device. The controller can generate an operation control signal based on instruction operation code and a timing signal, to complete control of fetching and executing instructions.

A wireless communication function of the terminal device may be implemented through the antenna 1, the antenna 2, the mobile communication module, the wireless communication module, the modem, and the like. In some embodiments, the antenna 1 of the terminal device is coupled to the mobile communication module, and the antenna 2 of the terminal device is coupled to the wireless communication module, so that the terminal device can communicate with a network side device and another terminal device by using a wireless communication technology.

In addition, an operating system runs on the foregoing components. For example, an iOS operating system, an Android open-source operating system, or a Windows operating system runs on the foregoing components.

The operating system of the terminal device may use a layered architecture, an event-driven architecture, a microcore architecture, a micro service architecture, or a cloud architecture. In embodiments of this application, an Android system of a layered architecture is used as an example to exemplarily describe a software and hardware structure of the terminal device. It should be noted that, in embodiments of this application, although the Android system is used as an example for description, a basic principle thereof is also applicable to a terminal device based on an operating system such as iOS or Windows.

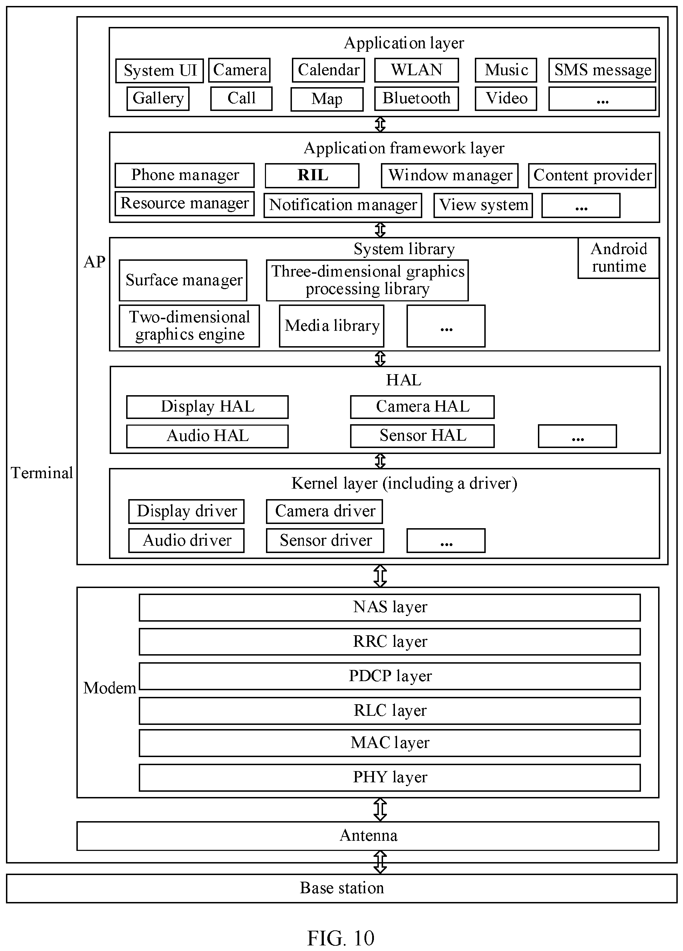

FIG. 10 is a schematic diagram of a software structure of a terminal device. The software structure adopts a layered architecture. The layered architecture divides software divided into a plurality of layers, and each layer has a clear role and task. Communication between layers is performed through a software interface. An Android system and an Android system running on an AP is used as an example. In some embodiments, the Android system is divided into five layers that are respectively an application layer, an application framework layer (Framework), Android runtime (Android runtime), a system library, a hardware abstraction layer (HAL), and a system kernel layer (Kernel) from top to bottom.

The application layer may include a series of application packages, The application packages may include APPs such as camera, gallery, calendar, call, map, WLAN, Bluetooth, music, video, and SMS messages. The application layer may further include a systemUI (system UI). The system UI is configured to display an interface of the terminal device, for example, display a signal icon corresponding to a SIM card or display a call interface. The application framework layer provides an application programming interface (Application Programming Interface, API) and a programming framework for applications in the application layer. The application framework layer includes some predefined functions. For example, the application framework layer may include a window manager, a content provider, a view system, a phone manager, a resource manager, a notification manager, and the like. The phone manager (telephony) is configured to provide a call

function of the terminal device, for example, management of a call status (including answering, declining, or the like). The application framework layer may further include a wireless communication interface layer (Radio Interface Layer, RIL). The modem processor (Modem) may exchange information with the telephony through the RIL.

The Modem may include a non-access stratum (Non-Access Stratum, NAS) layer, a radio resource control (radio resource control, RRC) layer, a packet data convergence protocol (Packet Data Convergence Protocol, PDCP) layer, a radio link control (Radio Link Control, RLC) layer, a medium access control layer (Medium Access Control Layer, MAC) layer, and a physical (Physical, PHY) layer. The layers may be software modules. The Modem may interact with the base station through the antenna.

In addition, some embodiments of this application provide a terminal device, including: one or more processors and a memory, where the memory is configured to store computer program code, the computer program code includes computer instructions, and the computer instructions, when executed by the one or more processors, enable the terminal device to perform the following random access method.

Some embodiments of this application provide a chip system, applied to a terminal device. The chip system includes at least one processor and an interface, where the interface is configured to receive instructions and transmit the instructions to the at least one processor; and the at least one processor runs the instructions to enable the terminal device to perform the following random access method. The chip system may be a Modem or a system on chip (System on Chip, Soc) including a Modem, and the foregoing method may be implemented by one Modem.

The method according to some embodiments of this application may be implemented by the Modem of the terminal device.

For example, the Modem may send an Msg 1 and receive an Msg 2 through an antenna, and the Modem may determine whether a TA value carried in the Msg 2 is greater than a first preset threshold. If the TA value carried in the Msg 2 is greater than the first preset threshold, the Modem may resend the Msg 1 through the antenna.

After the Modem resends the Msg 1 for an $N^{th}$ time, when the TA value in the received Msg 2 is greater than a second preset threshold, the Modem may skip resending the Msg 1.

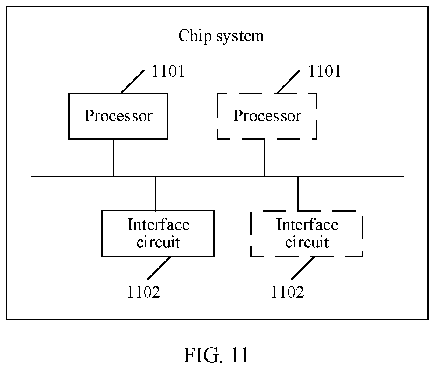

Embodiments of this application further provide a chip system. As shown in FIG. 11, the chip system includes at least one processor 1101 and at least one interface circuit 1102. The processor 1101 may be connected to the interface circuit 1102 through a line. For example, the interface circuit 1102 may be configured to receive a signal from another apparatus (such as a memory of a terminal device). In another example, the interface circuit 1102 may be configured to send a signal to another apparatus (for example, the processor 1101).

For example, the interface circuit 1102 may read instructions stored in the memory of the terminal device, and send the instructions to the processor 1101. When the instructions are executed by the processor 1101, the terminal device (for example, the terminal device shown in FIG. 9) may be enabled to perform the steps in the foregoing embodiments.

Certainly, the chip system may further include another discrete component. This is not specifically limited in embodiments of this application.

Embodiments of this application further provide a computer-readable storage medium. The computer-readable storage medium includes computer instructions. When the computer instructions are run on a terminal device (for example, the terminal device shown in FIG. 9), the terminal device is enabled to perform the functions or steps performed by the terminal device (for example, the UE) in the foregoing method embodiments.

Embodiments of this application further provide a computer program product. When the computer program product is run on a computer, the computer is enabled to perform the functions or steps performed by the terminal device in the foregoing method embodiments.

Embodiments of this application further provide a processing apparatus. The processing apparatus may be divided into different logical units or modules based on functions, and the units or modules perform different functions, so that the processing apparatus performs the functions or steps performed by the terminal device in the foregoing method embodiments.

Through the descriptions of the foregoing implementations, a person skilled in the art may clearly understand that, the foregoing functions may be allocated to and completed by different functional modules according to requirements. In other words, an inner structure of an apparatus is divided into different functional modules to complete all or some of the functions described above.

In a plurality of embodiments provided in this application, it should be understood that the disclosed apparatus and method may be implemented in other manners. For example, the above apparatus embodiment is merely illustrative. For example, module or unit division is merely logical function division and may be another division during actual implementation. For example, a plurality of units or components may be combined or integrated into another apparatus, or some features may be omitted or not executed. In addition, the mutual coupling or direct coupling or communication connection as shown or discussed can be indirect coupling or communication connection via some interfaces, devices or units, which can be in electrical, mechanical or other forms. The units described as separate components may or may not be physically separate, and a component displayed as a unit may be one physical unit or a plurality of physical units, that is, may be located in one position, or may be distributed in a plurality of different positions. Some or all of the units may be

selected based on actual requirements to achieve the objectives of the solutions of embodiments. In addition, the functional units in the embodiments of this application may be integrated into one processing unit, or each of the units may independently exist physically, or two or more units may be integrated into one unit. The above integrated unit can be implemented in a form of hardware or a software function unit. When the integrated unit is implemented in a form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in embodiments of this application. However, the foregoing storage medium includes: any medium that can store program code, such as a USB flash drive, a removable hard disk drive, a read only memory (read only memory, ROM), a random access memory (random access memory, RAM), a magnetic disk, or an optical disc. The foregoing content is only specific implementations of this application, but is not intended to limit the protection scope of this application. Any variation or replacement within the technical scope disclosed in this application shall fall within the protection scope of this application. Therefore, the protection scope of this application should be subject to the protection scope of the claims.

## Claims

**1.** A random access method, comprising:

sending, by a terminal device, a random access preamble;
receiving, by the terminal device, a random access response message, wherein the random access response message carries a timing advance TA value; and
when the TA value is greater than a first preset threshold, resending, by the terminal device, the random access preamble.

**2.** The method according to claim 1, further comprising:
after the terminal device resends the random access preamble for an $N^{th}$ time, when a TA value in a received random access response message is greater than a second preset threshold, skipping, by the terminal device, resending the random access preamble, wherein N is an integer greater than or equal to 1.

**3.** The method according to claim 1 or 2, wherein before the sending, by a terminal device, a random access preamble, the method further comprises:

receiving, by the terminal device when camping on a first cell, a radio resource control RRC connection reconfiguration message from a first network device, wherein the first network device is a network device corresponding to the first cell, the RRC connection reconfiguration message carries first information, and the first information is used for indicating the terminal device to be handed over to a second cell; and
the sending, by a terminal device, a random access preamble comprises:
sending, by the terminal device, the random access preamble to a second network device based on the first information, wherein the second network device is a network device corresponding to the second cell.

**4.** The method according to claim 3, further comprising:

after the terminal device resends the random access preamble for the $N^{th}$ time, sending, by the terminal device, an RRC connection reconfiguration complete message to the first network device when the TA value in the received random access response message is greater than the second preset threshold;
after the terminal device sends the RRC connection reconfiguration complete message to the first network device, determining, by the terminal device, that a radio link failure RLF occurs in the second cell; and
sending, by the terminal device, an RRC connection reestablishment message to a third network device, wherein the third network device is a network device corresponding to a third cell, and the third cell is different from the second cell.

**5.** The method according to claim 4, wherein the determining, by the terminal device, that a radio link failure RLF occurs in the second cell comprises:
determining, by the terminal device, that an uplink bit error rate of the terminal device in the second cell exceeds a third

preset threshold value.

6. The method according to claim 2 or 3, further comprising:

after the terminal device resends the random access preamble for the $N^{th}$ time, when the TA value in the received random access response message is greater than the second preset threshold, determining, by the terminal device, that an RLF occurs in the second cell; and
sending, by the terminal device, an RRC connection reestablishment message to a third network device, wherein the third network device is a network device corresponding to a third cell, and the third cell is different from the second cell.

7. The method according to any one of claims 1 to 6, wherein
the terminal device is in a high-speed moving state when sending the random access preamble.

8. The method according to any one of claims 3 to 7, wherein
the first cell is a high-speed rail cell or a subway cell.

9. The method according to any one of claims 3 to 7, wherein
the second cell is a high-speed rail cell or a subway cell.

10. The method according to any one of claims 1 to 9, wherein that the terminal device resends the random access preamble to the second network device comprises:
discarding, by the terminal device, the random access response message, and resending the random access preamble to the second network device.

11. The method according to any one of claims 3 to 10, wherein the receiving, by the terminal device when camping on a first cell, a radio resource control RRC connection reconfiguration message from a first network device comprises:
receiving, by the terminal device when camping on the first cell to perform a first service, the RRC connection reconfiguration message from the first network device, wherein the first service comprises a voice service or a data service.

12. The method according to any one of claims 4 to 11, wherein the method further comprises one or more of the following:

the third cell being a high-speed rail cell or a subway cell; or
the first cell being a long term evolution LTE cell, and the second cell being an LTE cell; or
the first cell being a new radio NR cell, and the second cell being an NR cell; or
the first cell being an LTE cell, and the second cell being an NR cell; or
the first cell being an NR cell, and the second cell being an LTE cell; or
the third cell being an LTE cell or an NR cell.

13. A terminal device, comprising: a memory and one or more processors, wherein the memory is coupled to the processor;
the memory is configured to store computer program code, and the computer program code comprises computer instructions; and the computer instructions, when executed by the processor, enable the terminal device to perform the method according to any one of claims 1 to 12.

14. A computer-readable storage medium, comprising computer instructions, wherein
the computer instructions, when run on a terminal device, enable the terminal device to perform the method according to any one of claims 1 to 12.

15. A chip system, comprising one or more interface circuits and one or more processors, wherein the interface circuit is connected to the processor through a line;
the chip system is applied to a terminal device comprising a communication module and a memory; the interface circuit is configured to receive a signal from the memory and send the signal to the processor, and the signal comprises computer instructions stored in the memory; and when the processor executes the computer instructions, the terminal device performs the method according to any one of claims 1 to 12.

Terminal device
Original cell
Target cell
Handover message (RRC connection reconfiguration message)
Msg 1
Msg 2 (carrying an excessively large TA value)
When the terminal device adjusts a sending occasion of uplink data in the target cell by using the excessively large TA value, a significant offset of the uplink data may be caused in time domain, and decoding of the uplink data by a network side is affected, causing an excessively high uplink bit error rate of the terminal device, and finally affecting normal services of the terminal device (for example, a user experiences sudden audio loss and call drop during a call on a high-speed rail)

FIG. 1

Network device b
First cell
Second cell
Train running track
Terminal device
Train
Network device a
Third cell
Network device c

FIG. 2

LTE
Terminal device
Core network
Internet
IMS
NR

FIG. 3

IMS
Terminal device 100
Network device_1
Network device_2
Terminal device 200

FIG. 4

Terminal device
Network device corresponding to a first cell (an original cell)
Network device corresponding to a second cell (a target cell 1)
Network device corresponding to a third cell (a target cell 2)
501. The terminal device camps on the first cell to perform a first service
502. The terminal device receives an RRC connection reconfiguration message, where the RRC connection reconfiguration message carries first information, and the first information is used for indicating the terminal device to be handed over to the second cell
503. The terminal device sends a random access preamble (Msg 1) to the network device corresponding to the second cell
504. The network device corresponding to the second cell sends a random access response message (Msg 2) to the terminal device
505. The terminal device determines whether a TA value carried in the random access response message is larger than a first preset threshold
N
507. When the TA value is less than or equal to the first preset threshold, the terminal device sends an RRC connection reconfiguration complete message to the network device corresponding to the second cell
Y
506. When the TA value is larger than the first preset threshold, the terminal device resends the random access preamble to the network device corresponding to the second cell
508. The network device corresponding to the second cell sends the random access response message to the terminal device
Repeat N times
509. After the terminal device resends the random access preamble for an Nth time, when a TA value in a random access response message received from the network device corresponding to the second cell is larger than a second preset threshold, the terminal device skips resending the random access preamble to the network device corresponding to the second cell
510. The terminal device determines that an RLF occurs in the second cell
511. The terminal device establishes an RRC connection to the network device corresponding to the third cell through an RRC reestablishment process


FIG. 5

RAR message (Msg 2)
TAC
12 bits

FIG. 6

UE
Original cell
Target cell
RRC connection reconfiguration message
Msg 1
Msg 2
Discard and resend the Msg 1 when a TA value carried in the Msg 2 is larger than a threshold
Msg 1
Msg 2
Discard and resend the Msg 1 when the TA value carried in the Msg 2 is larger than the threshold
RRC connection reconfiguration complete message

FIG. 7

UE
Original cell
Target cell
RRC connection reconfiguration message
Msg 1
Msg 2
Discard and resend the Msg 1 when a TA value carried in the Msg 2 is larger than a threshold
Msg 1
Msg 2
Discard and resend the Msg 1 when the TA value carried in the Msg 2 is larger than the threshold
Msg 1
Msg 2
No longer ignore the large TA value when the received TA values that are resent for a plurality of times are all large
RRC connection reconfiguration complete message

FIG. 8

Antenna 1
Antenna 2
Mobile communication module 2G/3G/4G/5G
Wireless communication module BT/WLAN/GNSS/NFC/IR/FM
Speaker
Receiver
Microphone
Headset jack
Audio module
Displays 1 to N
Cameras 1 to N
Indicator
Motor
Button
Internal memory
SIM card slots 2 to N
External memory interface
Processor
AP
Modem (Baseband processor)
Sensor module
Pressure sensor
Gyro sensor
Barometric pressure sensor
Magnetic sensor
Acceleration sensor
Distance sensor
Optical proximity sensor
Fingerprint sensor
Temperature sensor
Touch sensor
Ambient light sensor
Bone conduction sensor
USB interface
Charging input
Charging management module
Power management module
Battery

FIG. 9

Terminal

AP

Application layer

System UI | Camera | Calendar | WLAN | Music | SMS message

Gallery | Call | Map | Bluetooth | Video | ...

Application framework layer

Phone manager | **RIL** | Window manager | Content provider

Resource manager | Notification manager | View system | ...

System library

Android runtime

Surface manager | Three-dimensional graphics processing library

Two-dimensional graphics engine | Media library | ...

HAL

Display HAL | Camera HAL

Audio HAL | Sensor HAL | ...

Kernel layer (including a driver)

Display driver | Camera driver

Audio driver | Sensor driver | ...

Modem

NAS layer

RRC layer

PDCP layer

RLC layer

MAC layer

PHY layer

Antenna

Base station

FIG. 10

Chip system
1101
1101
Processor
Processor
Interface circuit
Interface circuit
1102
1102

FIG. 11

**INTERNATIONAL SEARCH REPORT**

International application No. **PCT/CN2024/112825**

**A. CLASSIFICATION OF SUBJECT MATTER**

H04W74/0836(2024.01)i

According to International Patent Classification (IPC) or to both national classification and IPC

**B. FIELDS SEARCHED**

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 定时, 时间, 提前, 超, 大, 高, 过大, 太大, 阈值, 门限, 预设, 失效, 有效, 重传, 重发, 调整, 更新, 丢弃, 忽略, 前导, 请求, 响应, 新的, tim+, advance, TA, threshold, valid+, retransmi+, updat+, adjust+, abandon+, ignor+, preamble, msg1, msg2, request+, respon+, new

**C. DOCUMENTS CONSIDERED TO BE RELEVANT**

| Category* | Citation of document, with indication, where appropriate, of the relevant passages | Relevant to claim No. |
|---|---|---|
| X | US 2022240208 A1 (ESSEN INNOVATION CO., LTD.) 28 July 2022 (2022-07-28) description, paragraphs [0054]-[0055] and [0062]-[0116] | 1-15 |
| A | CN 110536470 A (ZTE CORP.) 03 December 2019 (2019-12-03) entire document | 1-15 |
| A | CN 113825245 A (HUAWEI TECHNOLOGIES CO., LTD.) 21 December 2021 (2021-12-21) entire document | 1-15 |
| A | CN 115669104 A (GUANGDONG OPPO MOBILE TELECOMMUNICATIONS CORP., LTD.) 31 January 2023 (2023-01-31) entire document | 1-15 |
| A | NOKIA et al. "R2-2303644, Discussion on Timing Advance Report MAC CE Transmission in eMTC NTN" *3GPP TSG-RAN WG2 Meeting #121bis-e,* 26 April 2023 (2023-04-26), entire document | 1-15 |

☐ Further documents are listed in the continuation of Box C.

☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 November 2024** | **08 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/112825**

| Patent document cited in search report | Publication date (day/month/year) | Patent family member(s) | Publication date (day/month/year) |
|---|---|---|---|
| US 2022240208 A1 | 28 July 2022 | US 2022240205 A1 | 28 July 2022 |
| | | WO 2021228231 A1 | 18 November 2021 |
| | | WO 2021228241 A1 | 18 November 2021 |
| | | TW 202147894 A | 16 December 2021 |
| | | TW 202147893 A | 16 December 2021 |
| | | CN 115606262 A | 13 January 2023 |
| CN 110536470 A | 03 December 2019 | WO 2020151624 A1 | 30 July 2020 |
| | | US 2022104158 A1 | 31 March 2022 |
| | | KR 20210116585 A | 27 September 2021 |
| CN 113825245 A | 21 December 2021 | WO 2021254339 A1 | 23 December 2021 |
| | | EP 4152871 A1 | 22 March 2023 |
| | | KR 20230025455 A | 21 February 2023 |
| | | JP 2023531011 A | 20 July 2023 |
| | | US 2023345517 A1 | 26 October 2023 |
| CN 115669104 A | 31 January 2023 | WO 2022027238 A1 | 10 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311820749
- CN 202410178294